# EUROPÄISCHE PATENTANMELDUNG

(11) **EP 1 353 527 A1**
(43) Veröffentlichungstag der Anmeldung: **15.10.2003**
(21) Anmeldenummer: 02007908.3
(22) Anmeldetag: 09.04.2002
(51) Int. Cl.: H04Q 11/04, H04M 3/00

(54) **Signalverarbeitungseinheit mit seriellen Zeitmultiplexverbindungen zwischen Signalverarbeitungs- und Steuermitteln**

(71) Anmelder: Siemens AG, 80333 München (DE)
(72) Erfinder: Schandl, Stefan, 1130 Wien (AT)
(74) Vertreter: Berg, Peter, Dipl.-Ing.

(57) **Zusammenfassung**

Die Erfindung betrifft eine Signalverarbeitungseinheit, insbesondere für ein Telekommunikationssystem, welche Mittel zur digitalen Signalverarbeitung, Mittel zur Speicherung von Daten, sowie Steuermittel umfaßt, wobei die Mittel zur digitalen Signalverarbeitung und die Steuermittel über ein serielle Zeitmultiplexverbindungen miteinander verbunden sind.

Damit wird eine besonders vielseitig verwendbare Signalverarbeitungseinheit insbesondere für Signalverarbeitungsaufgaben bei digitalen Kommunikationssysteme angegeben.

## Beschreibung

Die Erfindung betrifft eine Signalverarbeitungseinheit, insbesondere für ein Telekommunikationssystem, welche Mittel zur digitalen Signalverarbeitung, Mittel zur Speicherung von Daten, sowie Steuermittel umfaßt.

In modernen digitalen Telekommunikationssystemen sind eine Reihe von Signalverarbeitungsaufgaben zu bewältigen. Diese Aufgaben umfassen unter anderem die Echokompensation, die Wählimpulserkennung, die Wähltonerkennung, sowie Spracherkennung, Sprachspeicherung, Sprachkompression und Sprachsynthese in Zusammenhang mit automatischen Auskunftsystemen.

Für diese Vielzahl der Signalverarbeitungsaufgaben werden aufgrund des damit jeweils verbundenen hohen, in Echtzeit zu erfolgenden Rechenaufwandes bislang funktionsspezifische Baugruppen eingesetzt, wodurch insbesondere die Nachrüstung von Netzelementen mit diesen Funktionalitäten logistisch aufwendig ist.

Der Erfindung liegt daher die Aufgabe zugrunde, eine Signalverarbeitungseinheit der eingangs genannten Art anzugeben, die für verschiedene Aufgaben der digitalen Signalverarbeitung einsetzbar ist.

Erfindungsgemäß wird diese Aufgabe gelöst durch eine Signalverarbeitungseinheit, bei der die Mittel zur digitalen Signalverarbeitung und die Steuermittel über serielle Zeitmultiplexverbindungen miteinander verbunden sind. Mit der erfindugsgemäßen Signalverarbeitungseinheit sind alle üblichen Signalverarbeitungsaufgaben wie die Echokompensation, die Wählimpulserkennung, die Wähltonerkennung, sowie Spracherkennung, Sprachspeicherung und Sprachsynthese in Zusammenhang mit automatischen Auskunftsystemen lösbar.

Vorteilhaft ist es, wenn die seriellen Zeitmultiplexverbindungen als PCM 30-System ausgeführt sind. Das PCM 30-System ist ein digitales Übertragungssystem, das die gleichzeitige Übertragung von bis zu 32 Sprechkanälen gestattet. Dieses System ist international genormt (Ausnahme U.S.A. mit 24 Sprechkanälen) und bildet die Grundlage für alle digitalen Übertragungssysteme höherer Kanalzahl.

Günstig ist es, wenn als Mittel zur digitalen Signalverarbeitung Digitale Signalprozessoren und/oder Mittel zur Echounterdrückung vorgesehen sind. Dabei handelt es sich um Standardelemente der digitalen Signalverarbeitung, die für diese Aufgaben entsprechend ausgebildet sind und in großen Stückzahlen und vergleichsweise kostengünstig verfügbar sind.

Vorteilhaft ist weiterhin eine Ausgestaltung, bei der die Signalverarbeitungseinheit als einzelne Baugruppe ausgeführt ist. Damit ist die Integration der Signalverarbeitungseinheit in Anlagen sehr einfach.

Ein besonders vorteilhafter Anwendungsfall ist die Signalverarbeitungseinheit als einzelne Baugruppe einer Vermittlungsstelle eines digitalen Vermittlungssystemes ausgeführt ist.

Die Erfindung wird anhand von Figuren näher erläutert. Es zeigen beispielhaft:
Fig. 1 die Einbettung einer erfindungsgemäßen Signalverarbeitungseinheit in eine Vermittlungsstelle eines Telekommunikationsnetzes.
Fig. 2 den Aufbau einer erfindungsgemäßen Signalverarbeitungseinheit ,
Fig. 3 eine detaillierte Darstellung der erfindungsgemäßen Zeitmultiplexverbindungen und
Fig. 4 eine Darstellung der Schnittstellen der Signalverarbeitungseinheit nach außen.

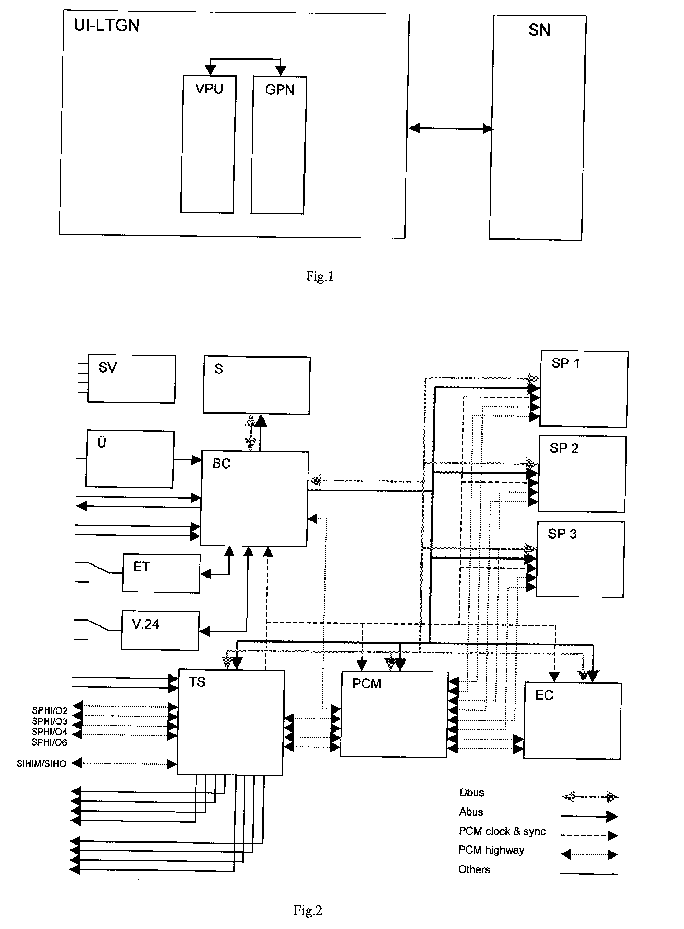

Die in Fig. 1 dargestellte Signalverarbeitungseinheit VPU ist eine Baugruppe, die in Steckplätze einer Anschlußgruppe UI-LTGN (auch UI-LTGP) eines digitalen Vermittlungssystemes, wie z.B. des Digitalen Elektronischen Wählsystemes EWSD der Firma Siemens eingeschoben wird. Die Anschlußgruppen bilden die Schnittstelle zwischen den Teilnehmerleitungen und dem Koppelnetzwerk SN. Neben den bis zu 4 erfindungsgemäßen Signalverarbeitungseinheiten enthält jede Anschlußgruppe UI-LTGN als zentrales Steuerelement einen Gruppenprozessor GP.

Der Aufbau einer erfindungsgemäßen Signalverarbeitungseinheit für das Siemens System EWSD wird anhand der Fig. 2 näher erläutert. Diese umfaßt die Module Stromversorgung SV, Hauptspeicher S, Überwachungseinrichtung Ü, Schnittstellentreiber für Ethernet und V.24 Anschlüsse, eine Taktversorgung TS, eine Steuerungseinheit für die Zeitmultiplexverbindungen PCM, Baugruppensteuerung BC, Signalprozessoren SP1, SP2, SP3 und eine Einheit zur Echounterdrückung EC.

Verbunden werden die funktionellen Elemente der Signalverarbeitungseinheit VPU mittels Datenbus Dbus, Adressbus Abus, Zeitmultiplexverbindungen PCM clock&sync und PCM Highway und sonstigen Steuer- und Signalisierungsleitungen Others.

Die Stromversorgung SV basiert auf einer DC/DC-Konvertereinheit, welche die im System verfügbare Spannung von -48/-60 V auf die von den Komponenten der Signalverarbeitungseinheit VPU benötigte Spannung von 3,3 V umsetzt.

Die Überwachungseinrichtung Ü gewährleistet bei Anlegen der Versorgungsspannung einen definierten Hochlauf der Signalverarbeitungseinheit VPU. Außerdem überwacht sie die Höhe der Versorgungsspannung und liefert bei Unterschreiten der zulässigen Werte ein Warnsignal. Mittels Überwachungseinrichtung Ü kann weiterhin auch während des Betriebes bei Bedarf eine Neustart der Signalverarbeitungseinheit VPU veranlaßt werden.

Die Schnittstellentreiber für Ethernet EN gemäß IEEE 802.3 ist mit einem "Fast Ethernet Controller" des Typs MPC860T der Firma Motorola verwirklicht. Die Ethernet-Schnittstelle der Signalverarbeitungseinheit VPU wird primär zum Laden von Steuerungsprogrammen für die Funktionselemente verwendet.

Der RS232 -Anschluss V.24 der Signalverarbeitungseinheit VPU der durch den Prozessor der Baugruppensteuerung BC angesteuert wird, dient überwiegend für die Fehlersuche und Überwachungsaufgaben (debugging and tracing).

Als weitere Benutzer-Schnittstellen der Signalverarbeitungseinheit VPU für Kontrollzwecke sind eine JTAG - Schnittstelle für Programmierungszwecke und LEDs zur Anzeige des Betriebszustandes vorgesehen.

Mittels Taktversorgung TS werden die für den Betrieb der Signalverarbeitungseinheit VPU erforderlichen Signale von Takten der Anschlußgruppe abgeleitet.

Mittels Baugruppensteuerung BC wird das Zusammenwirken aller Funktionselemente der Signalverarbeitungseinheit VPU bewerkstelligt. Realisiert wird die Baugruppensteuerung BC beim Ausführungsbeispiel mit einem Prozessor des Typs "Power-QUICCprocessor MPC860T" der Firma Motorola.

Zur Speicherung baugruppenspezifischer Daten ist ein Permanentspeicher vorgesehen, der mittels EEPROMs realisiert wird. In einem zusätzlichen, aus ROM oder Flash-Speicherelementen aufgebauten Permanentspeicher ist ein Mikrocontroller zur Steuerung des Hochlaufes des Prozessors realisiert.

Als Arbeitsspeicher des Prozessors sind 32 Mbyte SDRAM vorgesehen.

Als Signalprozessoren SP1, SP2, SP3 werden digitale Signal-Prozessoren des Typs TMS320C6201 der Firma Texas Instruments eingesetzt, die mit DRAM oder SDRAM Speicherelementen mit einer jeweils minimalen Speicherkapazität von 32 Mbyte ausgestattet sind.

Die Einheit zur Echounterdrückung EC ist so ausgestattet, daß für alle Empfangskanäle der Zeitmultiplexverbindungen Echounterdrückung bis zu einer Verzögerung von 64 ms möglich ist. Gesteuert wird die Einheit zur Echounterdrückung EC durch die Baugruppensteuerung BC.

Die Signalprozessoren sind jeweils über ihr sogenanntes Host port interface mit der Baugruppensteuerung und über serielle Schnittstellen mit den Zeitmultiplexverbindungen PCM verbunden.

Zusätzlich zu den Speicherelementen der einzelnen Funktionselemente ist ein Hauptspeicher S vorgesehn, der mittels Flash memory Elementen verwirklicht ist und bis zu 256 Mbytes Speicherraum umfaßt.

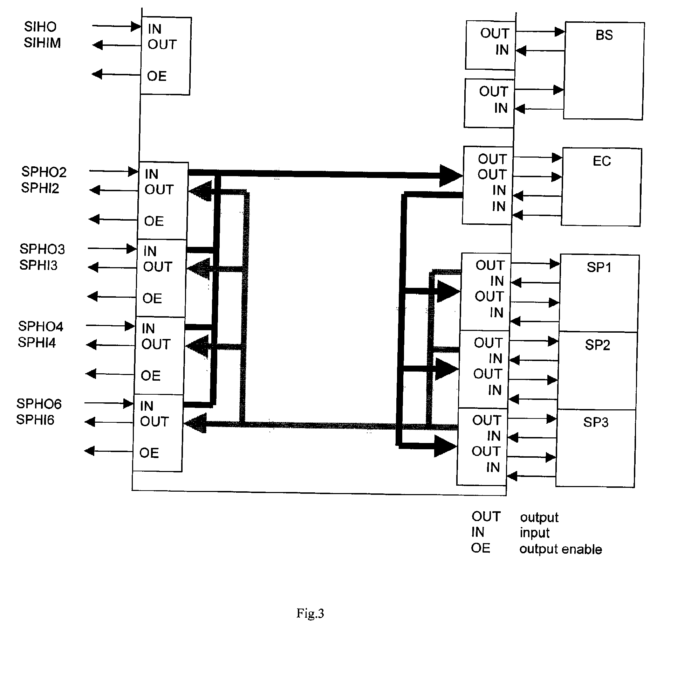

Die Steuerungseinheit für die Zeitmultiplexverbindungen PCM, wird anhand der Fig. 3 näher erläutert.

Diese zeigt beispielhaft eine detaillierte Darstellung der erfindungsgemäßen Zeitmultiplexverbindungen zwischen den funktionellen Elementen der Signalverarbeitungseinheit VPU : Baugruppensteuerung BC, Signalprozessoren SP1, SP2, SP3 , Einheit zur Echounterdrückung EC und den, durch die Einbindung der Signalverarbeitungseinheit VPU in eine Anschlußgruppe UI-LTGN eines digitalen Vermittlungssystemes, vorgegebenen Schnittstellen SIHO,SIHIM, SPHI2... SPHI6, und SPHO2...SPHO6.

Dabei sind die Zeitmultiplexverbindungen als PCM 30- Verbindungen mit 32 Fernsprechkanälen (SPHx) oder 32 Signalkanälen (SIHx) ausgebildet.

Die Signalisierungskanäle der Zeitmultiplexverbindungen PCM werden über die Signalisierungsschnittstelle SIHO,SIHIM direkt an eine serielle Schnittstelle der Baugruppensteuerung BS geführt und über eine weitere Schnittstelle der Baugruppensteuerung BS an Steuereingänge der Treiberelemente der-Fernsprechschnittstellen SPHI2... SPHI6, und SPHO2...SPHO6 der Signalverarbeitungseinheit VPU geführt.

Über die Fernsprechschnittstellen SPHI2... SPHI6, und SPHO2...SPHO6 ist die Signalverarbeitungseinheit VPU mit den Fernsprechkanälen der Anschlußgruppe UI-LTGN eines digitalen Vermittlungssystemes verbunden. Intern werden die Fernsprechkanäle an Schnittstellen der Signalprozessoren SP1, SP2, SP3 und der Einheit zur Echounterdrückung EC geführt.

Dabei ist auch die Möglichkeit vorgesehen, daß für den Datenaustausch zwischen den Signalprozessoren SP1, SP2, SP3 ungenutzte - an sich für den Fernsprechverkehr vorgesehene - Kanäle der Zeitmultiplexverbindungen PCM verwendet werden.

Durch die oben beschriebene Ausgestaltung kann die Signalverarbeitungseinheit VPU nun durch entsprechende Programmierung ihrer Funktionselemente in einfacher Weise an jede Signalverarbeitungsaufgabe angepaßt werden. Insbesondere durch die interne Weiterführung der Zeitmultiplexverbindungen PCM ist eine effiziente Bearbeitung und Weiterleitung der Fernsprechdaten ermöglicht, womit für die unterschiedlichsten Anforderungen die Verarbeitung in Echtzeit ermöglicht.

So ist auch der Einsatz als Voice over IP Gateway, d.h. als Schnittstelle zwischen einem herkömmlichen Zeitmultiplex-Telefonsystem und einem Computernetzwerk denkbar.

Aufgabe eines derartigen Gateways ist es, die komprimierten, packetweise über ein Computernetzwerk übermittelten Sprachdaten in Pulse-Code-modulierte Sprachdaten (PCM 30) umzuwandeln und umgekehrt. Damit ist dieses Gateway ein komplexes Netzwerkelement und erfordert entsprechend leistungsfähige Hardund Software. Diese anspruchsvollen Forderungen werden aufgrund ihrer erfindungsgemäßen Struktur durch die Signalverarbeitungseinheit erfüllt.

## Patentansprüche

1. Signalverarbeitungseinheit, insbesondere für ein Telekommunikationssystem, welche Mittel zur digitalen Signalverarbeitung, Mittel zur Speicherung von Daten, sowie Steuermittel umfaßt, **dadurch gekennzeichnet, daß** die Mittel zur digitalen Signalverarbeitung und die Steuermittel über serielle Zeitmultiplexverbindungen miteinander verbunden sind.

2. Signalverarbeitungseinheit nach Anspruch 1, **dadurch gekennzeichnet, daß** die seriellen Zeitmultiplex-verbindungen als PCM 30-System ausgeführt sind.

3. Signalverarbeitungseinheit nach einem der Ansprüche 1 oder 2, **dadurch gekennzeichnet, daß** als Mittel zur digitalen Signalverarbeitung Digitale Signalprozessoren und/oder Mittel zur Echounterdrückung vorgesehen sind.

4. Signalverarbeitungseinheit nach einem der Ansprüche 1 bis 3, **dadurch gekennzeichnet, daß** die Signalverarbeitungseinheit als einzelne Baugruppe ausgeführt ist.

5. Signalverarbeitungseinheit nach Anspruch4, **dadurch gekennzeichnet, daß** die Signalverarbeitungseinheit als einzelne Baugruppe einer Vermittlungsstelle eines digitalen Vermittlungssystemes ausgeführt ist.
